# EUROPÄISCHE PATENTANMELDUNG

(11) **EP 4 390 106 A1**
(43) Veröffentlichungstag der Anmeldung: **26.06.2024**
(21) Anmeldenummer: 23208422.8
(22) Anmeldetag: 08.11.2023
(51) Int. Cl.: F02K 3/06

(54) **MANTELSTROMTRIEBWERK**

(30) Priorität: 16.12.2022 DE 102022133702
(71) Anmelder: MTU Aero Engines AG, 80995 München (DE)
(72) Erfinder: Trübenbach, Jens, 80995 München (DE); von Frowein, Jan, 80995 München (DE)

(57) **Zusammenfassung**

Die vorliegende Erfindung betrifft ein Mantelstromtriebwerk mit einem Niederdruckturbinenmodul, das nicht mehr als 4-stufig ausgeführt ist, und einem Fan, der über ein Getriebe an das Niederdruckturbinenmodul gekoppelt ist, wobei das Mantelstromtriebwerk eine maximale Schubkraft von mindestens 70 kN und höchstens 300 kN hat, und wobei das Niederdruckturbinenmodul ein Verhältnis von Ringraumfläche austrittseitig zu Ringraumfläche eintrittseitig, Aₒᵤₜ/Aᵢₙ, von mindestens 2,2 und höchstens 3,3 hat.

## Beschreibung

### Technisches Gebiet

Die vorliegende Erfindung betrifft ein Mantelstromtriebwerk mit einem Niederdruckturbinenmodul.

### Stand der Technik

Der vorliegende Gegenstand richtet sich auf ein Mantelstromtriebwerk, dessen Schaufelkränze über ein Getriebe an den Fan gekoppelt sind. Ein solches Triebwerk wird auch als *geared turbo fan*-Triebwerkbezeichnet (GTF-Triebwerk). Im Betrieb dreht der Fan, übersetzt durch das Getriebe, mit einer im Verhältnis zum Niederdruckturbinenmodul geringeren Drehzahl. Als "Niederdruckturbinenmodul" wird vorliegend jener Abschnitt der Fluggasturbine des Mantelstromtriebwerks bezeichnet, der einem stromaufwärtigsten Turbinenmodul, das der Brennkammer direkt nachgelagert ist, in Strömungsrichtung nachgelagert ist. Das Niederdruckturbinenmodul kann eine mittlere und/oder innerste Welle des Mantelstromtriebwerks antreiben.

### Darstellung der Erfindung

Der vorliegenden Erfindung liegt das technische Problem zugrunde, ein vorteilhaftes Mantelstromtriebwerk anzugeben.

Dies wird erfindungsgemäß mit dem Mantelstromtriebwerk nach Anspruch 1 gelöst. Dieses hat einen maximalen Schub (*Take off*-Schub) von mindestens 70 kN und höchstens 300 kN, wobei das Niederdruckturbinenmodul des Triebwerks ein Verhältnis von Aₒᵤₜ/Aᵢₙ, also der Ringraumfläche am Austritt des Niederdruckturbinenmoduls zur Ringraumfläche an dessen Eintritt, von mindestens 2,2 und höchstens 3,3 hat. Mit seinem Schub ist das Mantelstromtriebwerk für sogenannte *narrow body-*Anwendungen ausgelegt, also für Regional-, Kurz- und Mittelstreckenflugzeuge. Dass das Flächenverhältnis Aᵢₙ/Aₒᵤₜ des Niederdruckturbinenmoduls einen Wert von mindestens 2,2 annimmt, ist dabei Ausdruck eines relativ großen Expansionsverhältnisses, das insbesondere in Verbindung mit einer vergleichsweise kleinen Anzahl Stufen des Niederdruckturbinenmoduls realisiert wird. Mit dem so eingestellten Triebwerk bzw. Niederdruckturbinenmodul lässt sich bei den *narrow body*-Anwendungen ein erhöhter Wirkungsgrad erzielen.

Bevorzugte Ausgestaltungen finden sich in den abhängigen Ansprüchen und der gesamten Offenbarung, wobei bei der Darstellung der Merkmale nicht immer im Einzelnen zwischen den unterschiedlichen Anspruchskategorien unterschieden wird. Wird bspw. ein für einen bestimmten Betrieb ausgelegtes Mantelstromtriebwerk beschrieben, ist dies zugleich auf eine entsprechende Verwendung bzw. ein entsprechendes Verfahren zum Betreiben des Mantelstromtriebwerks zu lesen. Ferner beziehen sich Angaben zum Niederdruckturbinenmodul stets auch auf das Mantelstromtriebwerk mit einem entsprechenden Niederdruckturbinenmodul.

In bevorzugter Ausgestaltung ist der maximale Schub des Mantelstromtriebwerks weiter limitiert, liegen nämlich vorteilhafte Obergrenzen bei höchstens 250 kN, 200 kN bzw. 170 kN. Wie eingangs erwähnt, können die geschilderten Vorteile insbesondere bei Regional-, Kurz- und Mittelstreckenflugzeuge, also kleineren Schubklassen realisiert werden. Mögliche Untergrenzen des maximalen Schubs, die auch unabhängig von den Obergrenzen von Interesse sein können und offenbart sein sollen, liegen bspw. bei 80 kN, 90 kN bzw. 110 kN. Generell wird der Schub vorliegend unter den Bedingungen auf Meereshöhe der *Internationalen Standardatmosphäre* (*International Standard Atmosphere,* ISA) der *International Civil Aviation Organization* (ICAO) betrachtet, also unter anderem bei einer Temperatur von 15 °C und einem Druck von einer Atmosphäre.

Bei einer bevorzugten Ausführungsform hat der Fan einen Durchmesser von höchstens 247 cm, in der Reihenfolge der Nennung zunehmend bevorzugt höchstens 240 cm, 233 cm, 226 cm bzw. 219 cm, was wiederum Ausdruck der *narrow body-*Anwendungen sein kann. Eine mögliche Untergrenze des Durchmessers kann bspw. bei 204 cm liegen.

In bevorzugter Ausgestaltung hat das Niederdruckturbinenmodul eine axiale Länge von höchstens 32 cm, weiter und besonders bevorzugt höchstens 26 cm bzw. 22 cm. Eine mögliche Untergrenze kann bspw. bei 20 cm liegen. In einer vorteilhaften Ausführung ist das Niederdruckturbinenmodul 3-stufig ausgeführt und hat es eine axiale Länge von mindestens 20 cm und höchstens 22 cm. Die axiale Länge wird vorliegend als axialer Abstand zwischen der Eintrittskante einer Schaufel des ersten Schaufelkranzes (Leit- oder Laufschaufel) des Niederdruckturbinenmoduls und der Austrittskante einer Schaufel (Laufschaufel) von dessen letztem Schaufelkranz genommen, wobei die axiale Position der Eintritts- und Austrittskante dabei jeweils an deren radial äußeren Ende genommen wird. Sofern bspw. dem Niederdruckturbinenmodul vorgelagert ein Turbinenzwischengehäuse (*mid turbine frame,* MTF) und/oder nachgelagert ein Turbinenaustrittsgehäuse (*turbine exitcase,* TEC) vorgesehen ist, bleibt dieses bzw. bleiben diese bei der Längenmessung unberücksichtigt, sind sie also nicht dem Niederdruckturbinenmodul zuzuschreiben.

Die Begrenzung der axialen Baulänge kann, insbesondere in Kombination mit einer kleinen Anzahl Stufen (siehe unten) hinsichtlich einer kompakten und damit bspw. auch gewichtsreduzierten Bauform von Vorteil sein, im Ergebnis also bspw. den Treibstoffverbrauch reduzieren. Mit der kleinen Anzahl Stufen können sich die Produktions- und auch Betriebskosten reduzieren lassen, es müssen bspw. weniger Bauteile vorgehalten, verbaut und auch gewartet werden.

Bevorzugt ist das Niederdruckturbinenmodul mit vier oder drei Stufen ausgeführt. Das 3-stufige Niederdruckturbinenmodul kann drei Laufschaufelkränze und zwei oder drei Leitschaufelkränze aufweisen, wobei der letzte (stromabwärtigste) Schaufelkranz immer ein Laufschaufelkranz ist; die axiale Länge eines entsprechenden Niederdruckturbinenmoduls kann bspw. höchstens 29 cm betragen (mit einer möglichen Untergrenze bei mindestens 20 cm). Das 4-stufige Niederdruckturbinenmodul kann vier Laufschaufelkränze und drei oder vier Leitschaufelkränze aufweisen, wobei der letzte Schaufelkranz stets ein Laufschaufelkranz ist; ein solches Niederdruckturbinenmodul kann insbesondere eine axiale Länge von höchstens 32 cm haben (mit einer möglichen Untergrenze bei mindestens 25 cm).

Gemäß einer bevorzugten Ausführungsform liegt das Flächenverhältnis Aₒᵤₜ/Aᵢₙ des Niederdruckturbinenmoduls bei höchstens 2,7 (in Worten: Zwei Komma sieben) und in einer anderen bevorzugten Ausführungsform bei höchstens 2,4 (in Worten: Zwei Komma vier). Damit lässt sich ein hoher Wirkungsgrad erzielen, insbesondere in Verbindung mit der begrenzten axialen Baulänge und/oder einem 3-stufigen Aufbau.

Bei einer bevorzugten Ausführungsform liegt das Nebenstromverhältnis des Mantelstromtriebwerks bei mindestens 12:1 und höchstens 15:1. Das Nebenstromverhältnis, auch als Bypassverhältnis (*bypass ratio,* BPR) bezeichnet, gibt das Verhältnis zwischen dem nach dem Fan außen am Triebwerk vorbeigeführten Luftmassenstrom (Nebenstrom oder Mantelstrom) zum durch Verdichter/Brennkammer/Turbine geführten Kernstrom des Triebwerks an. Das hohe Nebenstromverhältnis kann bspw. den Vortriebswirkungsgrad erhöhen und Geräuschemissionen verringern.

In bevorzugter Ausgestaltung liegt die Drehzahl des Niederdruckturbinenmoduls, sogenannte "redline" in der Triebwerkszulassung "type certificate", bei mindestens 6.500 U/Min (*revolutions per minute,* rpm), in Worten: Sechstausendfünfhundert Umdrehungen pro Minute. Eine vorteilhafte Obergrenze, die im Allgemeinen auch unabhängig von der Untergrenze offenbart sein soll, liegt bei 14.500 U/Min. Dieser Niederdruckturbinenmodul-Drehzahlbereich (6.500-14.500 U/Min, *redline*) kann bevorzugt in einem Mantelstromtriebwerk mit einem maximalen Schub von 70-300 kN realisiert sein. Weitere vorteilhafte Drehzahl-Schub-Kombinationen liegen bei:

| | | | |
|---|---|---|---|
| 7.500-14.500 U/Min | *redline* | bei Schub: | 70-250 kN |
| 8.500-14.500 U/Min | *redline* | bei Schub: | 70-180 kN |
| 9.500-14.500 U/Min | *redline* | bei Schub: | 70-150 kN |
| 10.000-11.500 U/Min | *redline* | bei Schub: | 110-140 kN |

Damit werden in einem jeweiligen Schubbereich höhere Drehzahlen als bei einem konventionellen Triebwerk realisiert, was die aerodynamischen Belastungen verringern und damit höhere Wirkungsgrade ermöglichen kann.

Die Erfindung betrifft auch ein Flugzeug, insbesondere Schmalrumpfflugzeug, mit einem vorliegend offenbarten Mantelstromtriebwerk.

Ferner betrifft die Erfindung die Verwendung eines Niederdruckturbinenmoduls in einem vorliegend beschriebenen Mantelstromtriebwerk, insbesondere in einem vorstehend offenbarten Drehzahlbereich und/oder entsprechendem Schubbereich.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.
- Figur 1: zeigt ein Mantelstromtriebwerk in einem schematischen Axialschnitt;
- Figur 2: illustriert ein Verhältnis von Ringraumfläche austrittseitig zu Ringraumfläche eintrittsseitig.

### Bevorzugte Ausführung der Erfindung

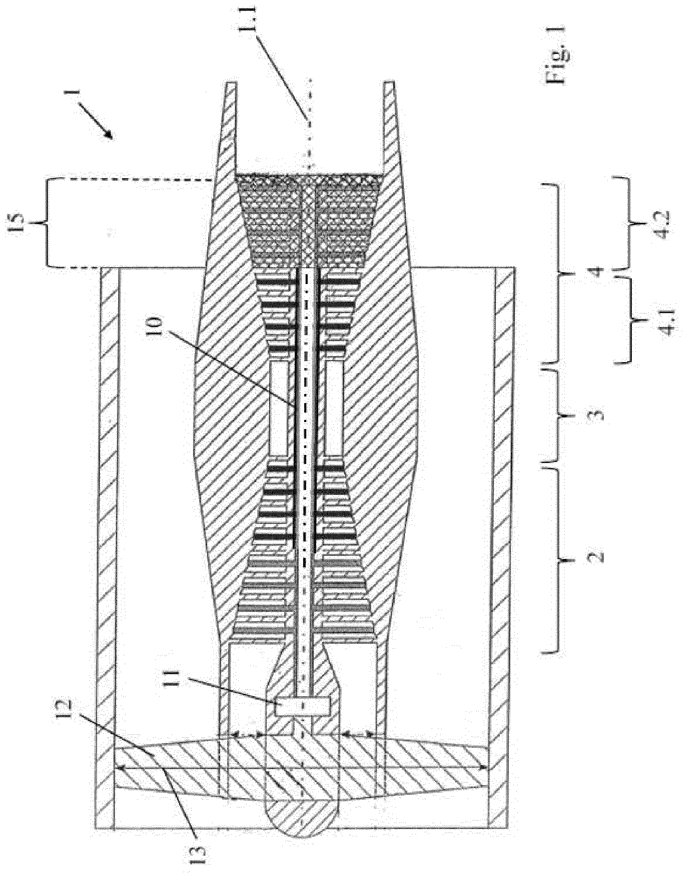

**Fig. 1** zeigt ein Mantelstromtriebwerk 1 in einem schematischen Axialschnitt, also in einer seine Längsachse 1.1 beinhaltenden Schnittebene betrachtet. Funktional gliedert sich das Mantelstromtriebwerk 1 in Verdichter 2, Brennkammer 3 und Turbine 4, wobei Letztere ein Hochdruckturbinenmodul 4.1 und ein Niederdruckturbinenmodul 4.2 aufweist. Im Betrieb wird angesaugte Luft im Verdichter 2 komprimiert, in der nachgelagerten Brennkammer 3 mit hinzugemischten Treibstoff verbrannt und wird das entstehende Heißgas dann in der Turbine 4 expandiert.

Das Hochdruck- und Niederdruckturbinenmodul 4.1, 4.2 sind jeweils mehrstufig aufgebaut, weisen also axial aufeinanderfolgend jeweils mehrere Leit- und Laufschaufelkränze auf. Letztere werden mit dem expandierenden Heißgas in eine Rotation um die Längsachse 2 versetzt, wobei diese kinetische Energie anteilig auch zum Antreiben des Verdichters 2 genutzt wird. Eine Welle 10, auf welcher die Laufschaufelkränze des Niederdruckturbinenmoduls 4.2 drehen, ist über ein Getriebe 11 an einen Fan 12 des Mantelstromtriebwerks 1 gekoppelt, mit der gewonnenen kinetischen Energie wird also anteilig auch der Fan 12 angetrieben.

Ein Durchmesser 13 des Fans 12 liegt exemplarisch bei 215 cm. Das Niederdruckturbinenmodul 4.2, das 4- oder insbesondere 3-stufig ausgeführt ist, hat eine axiale Länge 15 von 28 cm. Das Flächenverhältnis Aₒᵤₜ/Aᵢₙ des Niederdruckturbinenmoduls 4.2 liegt vorliegend exemplarisch bei 2,8, insgesamt wird mit dem Niederdruckturbinenmodul 4.2 ein Expansionsverhältnis größer 8 realisiert.

Das Mantelstromtriebwerk insgesamt kann insbesondere für einen Schubbereich von 110 kN bis 140 kN ausgelegt sein, wobei die Niederdruckturbinenmodul-Drehzahl (*redline*) dann zwischen 10.000 und 11.500 U/Min liegt.

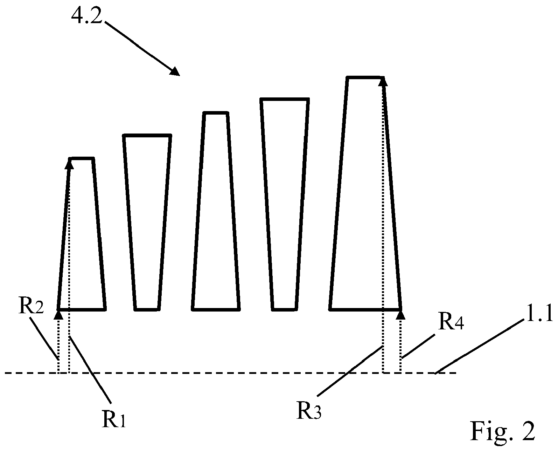

**Figur 2** zeigt eine schematische Ansicht des Niederdruckturbinenmoduls 4.2 mit einigen schematisch wiedergegebenen Schaufeln und illustriert, wie das Flächenverhältnis Aₒᵤₜ/Aᵢₙ ermittelt wird. Dabei ergibt sich Aᵢₙ als Differenz von, jeweils zum Quadrat, dem Radius R₁ an der radial äußersten Position der vordersten Eintrittskante (R₁² an vorderster Eintrittskante an radial äußerster Position) und dem Radius R₂ an der radial innersten Position der vordersten Eintrittskante (R₂² an vorderster Eintrittskante an radial innerster Position), wobei diese Differenz mit der Kreiszahl π multipliziert wird. Aₒᵤₜ ergibt sich als Differenz von, jeweils zum Quadrat, dem Radius R₃ an der radial äußersten Position der hintersten Austrittskante (R₃² an hinterster Austrittskante an radial äußerster Position) und dem Radius R₄ an der radial innersten

Position der hintersten Austrittskante (R₄² an hinterster Austrittskante an radial innerster Position), wobei diese Differenz mit der Kreiszahl π multipliziert wird.

**BEZUGSZEICHENLISTE**

| | |
|---|---|
| Mantelstromtriebwerk | 1 |
| Längsachse | 1.1 |
| Verdichter | 2 |
| Brennkammer | 3 |
| Turbine | 4 |
| Hochdruckturbinenmodul | 4.1 |
| Niederdruckturbinenmodul | 4.2 |
| Welle | 10 |
| Getriebe | 11 |
| Fan | 12 |
| Durchmesser | 13 |
| Axiale Länge | 15 |

## Patentansprüche

1. Mantelstromtriebwerk (1) mit
- einem Niederdruckturbinenmodul (4.2), das nicht mehr als 4-stufig ausgeführt ist, und
- einem Fan (12), der über ein Getriebe (11) an das Niederdruckturbinenmodul (4.2) gekoppelt ist,
wobei das Mantelstromtriebwerk (1) eine maximale Schubkraft von mindestens 70 kN und höchstens 300 kN hat,
und wobei das Niederdruckturbinenmodul (4.2) ein Verhältnis von Ringraumfläche austrittseitig zu Ringraumfläche eintrittseitig, Aₒᵤₜ/Aᵢₙ, von mindestens 2,2 und höchstens 3,3 hat.

2. Mantelstromtriebwerk (1) nach Anspruch 1, welches einen maximalen Schub von höchstens 250 kN, bevorzugt höchstens 200 kN oder 170 kN hat.

3. Mantelstromtriebwerk (1) nach Anspruch 1 oder 2, bei welchem der Fan (12) einen Durchmesser (13) von mindestens 204 cm und höchstens 247 cm, insbesondere höchstens 219 cm, hat.

4. Mantelstromtriebwerk (1) nach einem der vorstehenden Ansprüche, bei welchem das Niederdruckturbinenmodul (4.2) eine axiale Länge (15) von mindestens 20 cm und höchstens 32 cm, insbesondere höchstens 22 cm, hat.

5. Mantelstromtriebwerk (1) nach einem der vorstehenden Ansprüche, bei welchem das Niederdruckturbinenmodul (4.2) 3-stufig ausgeführt ist und das Verhältnis Aₒᵤₜ/Aᵢₙ des Niederdruckturbinenmoduls (4.2) bei mindestens 2,3 und höchstens 2,7 liegt oder bei mindestens 2,2 und höchstens 2,4 liegt.

6. Mantelstromtriebwerk (1) nach einem der Ansprüche 1 bis 4, bei welchem das Niederdruckturbinenmodul (4.2) 4-stufig ausgeführt ist und das Verhältnis Aₒᵤₜ/Aᵢₙ des Niederdruckturbinenmoduls (4.2) bei mindestens 2,5 und höchstens 3,3 liegt.

7. Mantelstromtriebwerk (1) nach einem der vorstehenden Ansprüche, dessen Nebenstromverhältnis bei mindestens 12:1 und höchstens 15:1 liegt.

8. Mantelstromtriebwerk (1) nach einem der vorstehenden Ansprüche, dessen Niederdruckturbinenmodul-Drehzahl (*redline*) bei mindestens 6.500 U/Min und höchstens 14.500 U/Min liegt.

9. Regional-, Kurz- oder Mittelstreckenflugzeug mit einem Mantelstromtriebwerk (1) nach einem der vorstehenden Ansprüche.

10. Verwendung eines Niederdruckturbinenmoduls (4.2) in einem Mantelstromtriebwerk (1) nach einem der Ansprüche 1 bis 9.

11. Verwendung nach Anspruch 10, bei welcher das Mantelstromtriebwerk (1) mit einem maximalen Schub zwischen 70 kN und 300 kN und das Niederdruckturbinenmodul (4.2) dabei mit einer Drehzahl von 6.500-14.500 U/Min dreht.
